# EUROPÄISCHE PATENTANMELDUNG

(11) **EP 2 113 698 A2**
(43) Veröffentlichungstag der Anmeldung: **04.11.2009**
(21) Anmeldenummer: 09159245.1
(22) Anmeldetag: 30.04.2009
(51) Int. Cl.: F16K 31/60, F16K 31/528

(54) **Sitzventil**

(30) Priorität: 30.04.2008 DE 102008001520
(71) Anmelder: Georg Schünemann GmbH, 28201 Bremen (DE)
(72) Erfinder: Linster, Wolfgang, 24598, Heidmühlen (DE); Keller, Gerd, 28779 Bremen (DE)
(74) Vertreter: Eisenführ, Speiser & Partner

(57) **Zusammenfassung**

Die Erfindung betrifft ein Ventil (101), insbesondere Mehrwegeventil, mit einem Gehäuse, welches einen Hohlraum (104), mindestens einen Einlass und mindestens einen Auslass für ein Fluid aufweist, einem beweglich in dem Hohlraum (104) angeordneten Antriebselement (111) zur Bewegung eines Ventilkörpers (118), und einem Ventilsitz (118'), welcher in dem Gehäuse ausgebildet und dem Ventilkörper (118) zuordenbar ist. Erfindungsgemäß ist der Ventilkörper (118) durch Kopplungsmittel mit dem Antriebselement (111) verbunden und zu diesem relativ bewegbar.

## Beschreibung

Die vorliegende Erfindung betrifft ein Ventil, insbesondere ein Mehrwegeventil, mit einem Gehäuse, welches einen Hohlraum, mindestens einen Einlass und mindestens einen Auslass für ein Fluid aufweist, einem beweglich in dem Hohlraum angeordneten Antriebselement zur Bewegung eines Ventilkörpers, und einem Ventilsitz, welcher in dem Gehäuse ausgebildet und dem Ventilkörper zuordenbar ist.

Ventile der vorstehend genannten Art kommen in Anwendungen zum Einsatz, in denen der Fluss von Fluiden gesteuert werden soll. Es sind sowohl Ein- als auch Mehrwegeventile bekannt. Während Einwegeventile den Fluss von einem Armaturen-Eingang zu einem zugeordneten Ausgang steuern, sind Mehrwegeventile dazu ausgebildet, Fluidströme zwischen mehr als einem Eingang und einem Ausgang zu steuern. Weiterhin besteht mit solchen Ventilen die Möglichkeit, in einer Mehrzahl von Schaltzuständen verschiedene Kombinationen von Ventilein-und Ausgängen mit einander zu schalten. Ein- und Mehrwegeventile werden zur Verwendung mit verschiedenen Betätigungsarten hergestellt. Es besteht die Möglichkeit, Ventile der eingangs genannten Art pneumatisch, hydraulisch, magnetisch oder mechanisch zu schalten.

Den verschiedenen Ventilen dieser Betriebsarten ist die grundsätzliche Funktionsweise des Verschließens und Freigebens von Strömungswegen gemein. In dem Gehäuse der Ventile ist ein Hohlraum vorgesehen, in welchem das Antriebselement angeordnet ist. Der bzw. die Ein- und Auslässe münden in den Hohlraum. In bekannten Ventilen sind die Ventilkörper mit dem Antriebselement mechanisch starr verbunden, so dass das Antriebselement durch Ausführung einer Bewegung rotatorischer und/oder translatorischer Art zur unmittelbaren Auslösung einer gleichförmigen Bewegung aller Ventilkörper ausgebildet ist. Je größer die Anzahl der konstruktiv zu verwirklichenden Schaltzustände und/oder Ein- und Auslässe in einem einzigen Ventil ist, desto wichtiger ist die passgenaue Anordnung und Tolerierung der Ventilkörper im Bezug auf die Ihnen zugeordnete Ventil-Öffnung: Schon kleinste Überschreitungen der Fertigungstoleranzen bezüglich der Anordnung des Ventilkörper zu der zugeordneten Ventil-Öffnung führen zu einer Verschlechterung der Abdichtung zwischen den betroffenen Kontaktflächen.

Der fertigungstechnische Aufwand, welcher zur Einhaltung der Toleranzen und somit zur Verhinderung von Undichtigkeiten betrieben werden muss, steigt mit der Anzahl der in dem Ventil vorgesehenen Paarungen aus Ventilkörper und Ventil-Öffnungen. Hieraus ergibt sich für den Hersteller solcher Ventile der Nachteil eines erhöhten Kosten- und Zeitaufwandes für die Herstellung.

Die dieser Erfindung zugrundeliegende Aufgabe besteht folglich darin, ein Ventil anzugeben, welches trotz größerer Fertigungstoleranzen eine zuverlässige Schließfunktion ermöglicht, um den Fertigungsaufwand zu verringern.

Die vorliegende Erfindung löst diese Aufgabe durch ein Ventil, das **dadurch gekennzeichnet ist, dass** der Ventilkörper durch Kopplungsmittel mit dem Antriebselement verbunden und zu diesem relativ bewegbar ist.

Erfindungsgemäß ist das Ventil so ausgebildet, dass ein Ventilkörper nicht unmittelbar durch die Bewegung des Antriebselementes bewegt wird, sondern infolge seiner Bewegbarkeit relativ zu dem Antriebselement erst dann eine Bewegung des Ventilkörpers ausgelöst wird, wenn diese von den Kopplungsmitteln erfasst werden. Die Extremposition des Ventilkörpers wird auf diese Weise nicht durch die exakte Position des Antriebselements bestimmt, sondern durch die Lage des dem Ventilkörper zugeordneten Ventilsitzes einerseits und der Konfiguration der Kopplungsmittel andererseits. Befindet sich das Ventil in einer geschlossenen Stellung, ist die Position des Ventilkörpers exakt durch den Kontakt mit dem Ventilsitz definiert. Die Position des Ventils in teilweise geöffneten Stellungen sowie in vollständig geöffneter Stellung wird durch die Kopplungsmittel definiert.

Gemäß einer Weiterbildung der vorliegenden Erfindung sind die Kopplungsmittel in Form eines ersten Mitnehmers an dem Antriebselement ausgebildet, welcher in mindestens einer Stellung des Ventils mit dem ersten Ventilkörper in Kontakt bringbar ist. Durch eine geeignete Bewegung des Antriebselements wird der Mitnehmer in Kontakt mit dem Ventilkörper gebracht und bewirkt bei einer Weiterbewegung des Antriebselements das Öffnen des Ventils. Der Kontakt und die Kraftübertragung zwischen dem Ventilkörper und dem Mitnehmer erfolgt auf vorteilhafte Weise durch Formschluss, da auf diese Weise hohe Übertragungskräfte aufgenommen werden können. Für Anwendungen, in denen besonders langsames Öffnen und/oder Schließen des Ventils gefordert ist, kann allerdings mittels Haft- oder Gleitreibung Kraft von dem Mitnehmer auf den Ventilkörper übertragen werden.

In einer vorteilhaften Ausführungsform der Erfindung ist ein erstes Feder-Element mittels Kraftwirkung zur Herstellung des Kontakts zwischen dem ersten Ventilkörper und dem ersten Ventilsitz und/oder dem ersten Mitnehmer ausgebildet und zwischen dem Gehäuse und dem ersten Ventilkörper angeordnet. Das Federelement ist in vorteilhafter Anordnung dazu ausgebildet, eine vom Ventilkörper zum Ventilsitz hin gerichtete Kraft auszuüben.

Aufgrund dieser Kraftausübung wird der Ventilkörper gegen den Ventilsitz gepresst. Die Paarung Ventilkörper/Ventilsitz ist somit stets verschlossen, bis der Mitnehmer durch das Antriebselement mit dem Ventilkörper in Kontakt gebracht wird und entgegen der Wirkrichtung des Federelements arbeitet, was in einer teilweisen oder vollständigen Öffnung des Ventils führt.

In einer weiteren vorteilhaften Ausführungsform des erfindungsgemäßen Ventils ist ein zweiter Ventilkörper, der einem zweiten Ventilsitz zuordenbar ist, durch Kopplungsmittel mit dem Antriebselement verbunden und zu diesem relativ bewegbar. Durch Integration des zweiten Ventilkörpers und des zweiten Ventilsitzes ist das erfindungsgemäße Ventil als ein Zweiwege-Sitzventil ausgebildet.

Gemäß einer weiteren Ausführungsform der vorliegenden Erfindung ist der erste Mitnehmer an dem Antriebselement ausgebildet, um in mindestens einer Stellung des Ventils mit dem zweiten Ventilkörper in Kontakt bringbar zu sein. Die Anordnung des ersten Mitnehmers zwischen dem ersten und zweiten Ventilkörper ist vorteilhaft, um durch Bewegung des ersten Mitnehmers in eine Richtung eine Steuerung des ersten Paares Ventilkörper/Ventilsitz vorzunehmen, und durch die Bewegung des ersten Mitnehmers in eine zweite Richtung eine Steuerung des zweiten Paares Ventilkörper/Ventilsitz vorzunehmen.

In einer weiteren vorteilhaften Ausführungsform der Erfindung ist ein zweites Feder-Element mittels Kraftwirkung zur Herstellung des Kontakts zwischen dem zweiten Ventilkörper und dem zweiten Ventilsitz und/oder dem ersten Mitnehmer ausgebildet und zwischen dem Gehäuse und dem zweiten Ventilkörper angeordnet. Das zweite Federelement ist in vorteilhafter Anordnung dazu ausgebildet, eine vom zweiten Ventilkörper zum zweiten Ventilsitz hin gerichtete Kraft auszuüben.

Aufgrund dieser Kraftausübung wird der zweite Ventilkörper gegen den zweiten Ventilsitz gepresst. Die Paarung zweiter Ventilkörper/zweiter Ventilsitz ist somit stets verschlossen, bis der erste Mitnehmer durch das Antriebselement mit dem zweiten Ventilkörper in Kontakt gebracht wird und entgegen der Wirkrichtung des zweiten Federelements arbeitet, was in einer teilweisen oder vollständigen Öffnung der Paarung zweiter Ventilkörper/zweiter Ventilsitz führt.

In einer bevorzugten Ausführungsform der vorliegenden Erfindung sind einer oder mehrere weitere Ventilkörper vorgesehen, die einem jeweiligen weiteren Ventilsitz zuordenbar sind, durch Kopplungsmittel mit dem Antriebselement verbunden und zu diesem relativ bewegbar sind, und durch weitere jeweils zugeordnete Federelemente mit dem jeweils zugeordneten Ventilsitz und/oder einem weiteren Kopplungsmittel in Kontakt bringbar sind, wobei die weiteren Federelemente zwischen den weiteren Ventilkörpern einerseits und den weiteren Ventilkörpern, dem Gehäuse oder dem Antriebselement andererseits angeordnet sind.

Die Ausführungsformen des erfindungsgemäßen Ventils als Ein-, Zwei-, Drei-und Vierwegeventil verdeutlichen, dass durch eine entsprechende Erweiterung des Ventils um weitere Ventilkörper, Ventilsitze, Kopplungsmittel und Federelemente eine Ausführung des Ventils als Fünf- oder Sechswegeventil mit geringer Aufwandssteigerung möglich ist. Die Vorteile des erfindungsgemäßen Ventils gegenüber konventionellen Mehrwegeventilen werden umso deutlicher, je höher die Anzahl der integrierten Schaltwege ist: Während der Anspruch der Fertigungsgenauigkeit eines Ventilschiebers mit mehreren Ventilkörpern bei steigender Anzahl der Ventilkörper zunehmend unbeherrschbar wird, bleibt die Anforderung der genauen Anordnung der erfindungsgemäßen Ventilsitze gleich gering. Die Zuverlässigkeit der Schließfunktion wird durch die zugeordneten Federelemente gewährleistet.

Gemäß einer weiteren vorteilhaften Weiterbildung der vorliegenden Erfindung sind die ersten, zweiten, und/oder weiteren Ventilkörper ausgebildet, um axial an der Stange entlang gleiten zu können. Die axiale Bewegbarkeit der Ventilkörper auf der Stange wird auf vorteilhafte Weise durch Gleitsitz-Passungen zwischen Bohrungen in den Ventilkörpern und den Abschnitten der Stange, entlang welcher die Ventilkörper verschiebbar sein sollen, erreicht. Zu einer weiteren Reduzierung der Fertigungskosten sind auch Spiel-Passungen zulässig, da die Ventilkörper durch die Federelemente stets im richtigen Winkel gegen die Ventilsitze gepresst werden und somit unabhängig von einer axialen Führung durch die Stange sind.

In einer vorteilhaften Ausführungsform des erfindungsgemäßen Ventils ist der erste und/oder zweite Mitnehmer als Ring oder Absatz auf der Stange ausgebildet. Abhängig von der durch die Federelemente aufgebrachten und von dem Mitnehmern aufzunehmenden Kraft können die Mitnehmer verschiedenartig ausgebildet sein. Müssen lediglich geringe Kräfte aufgenommen werden, können Sicherungsringe in Nuten auf der Stange angebracht werden. Dies ist insbesondere aus Kostengründen vorteilhaft. Müssen höhere Kräfte durch die Mitnehmer aufgenommen werden oder ist das Antriebselement nicht rotationssymmetrisch ausgebildet, ist es vorteilhafter, Absätze im Antriebselement vorzusehen, gegen die sich die Ventilkörper abstützen.

In einer weiteren Ausführungsform des erfindungsgemäßen Ventils sind die Kopplungsmittel in Form zumindest eines Verdrängers an dem Antriebselement ausbildet, welcher in mindestens einer Stellung des Ventils mit einem zugeordneten Ventilkörper in Kontakt bringbar ist. Durch das Anordnen eines Verdrängers an dem Antriebselement zum Zweck der Bewegung des Ventilkörpers wird auf vorteilhafte Weise erreicht, dass die Bewegung des Ventilkörpers nicht identisch mit der Bewegungsform des Antriebselementes ist. Vielmehr kann abhängig von der Ausgestaltung des Verdrängers die Öffnungs- und Schließgeschwindigkeit des Ventilkörpers eine andere als die Bewegungsgeschwindigkeit des Antriebselementes sein.

Gemäß einer weiteren Ausführungsform der vorliegenden Erfindung ist jeweils ein weiterer Verdränger weiteren, relativ zu dem Antriebselement bewegbaren Ventilkörpern zugeordnet. Durch die Zuordnung eines Verdrängers zu jedem im Ventil vorgesehenen Ventilkörper lässt sich jeder Ventilkörper nach Bedarf so anpassen, dass er ein für den jeweiligen Anwendungsfall möglichst günstiges Öffnungs- bzw. Schließverhalten aufweist. Hierzu kann jedem Ventilkörper ein anderer Verdränger zugewiesen werden, der entweder eine Kontaktfläche mit konstantem Steigungswinkel oder eine gekrümmte Kontaktfläche aufweist.

In einer weiteren Ausführungsform des erfindungsgemäßen Ventils sind einer oder mehrere Ventilkörper so im Gehäuse angeordnet sind, dass sie mittels der Bewegung relativ zu dem zugeordneten Verdränger in eine von der Bewegungsrichtung des Antriebselements abweichende Richtung bewegbar sind. So kann abhängig von der Ausgestaltung des Gehäuses eine Auslenkung der Ventilkörper gewählt werden, die dem jeweiligen Anwendungsfall am besten gerecht wird. Es hat sich als vorteilhaft herausgestellt, die Bewegungsrichtung der Ventilkörper im Wesentlichen senkrecht zur Bewegungsrichtung des Antriebselementes auszugestalten. Andere, davon abweichende Anordnungen der Ventilkörper im Gehäuse lassen aber selbstverständlich auch weitere Ausrichtungen der Ventilkörper zu.

Gemäß einer weiteren vorteilhaften Ausführungsform der vorliegenden Erfindung weisen die Kupplungsmittel einen Kolben auf, der mittels Druckbeaufschlagung bewegbar ist. In dieser vorteilhaften Ausführungsform ist das Ventil mittels einer hydraulischen oder pneumatischen Kraftübertragung schaltbar. Der Kolben ist derart mit zumindest einem Ventilkörper verbindbar, dass eine Bewegung des Kolbens auch in einer Bewegung des Ventilkörpers resultiert.

In einer weiteren vorteilhaften Ausführung des erfindungsgemäßen Ventils ist der Kolben in einem Hubraum bewegbar angeordnet, welcher mittels einer Druckleitung fluidleitend mit einem Einlass verbunden ist. Dabei ist es vorteilhaft, wenn der Einlass ebenfalls fluidleitend mit der Zuleitung verbunden ist, aus welcher Fluid durch das Ventil hindurchgeleitet werden soll. Auf diese Weise ist auf besonders vorteilhafte Weise realisiert, dass das Ventil automatisch schaltbar ist, sobald ein ausreichend hoher Druck von der Zuleitung auf den Einlass des Ventils gegeben wird. Bis zu einer gewissen Schwelle bleibt das Ventil infolgedessen geschlossen, und sobald der Druck ausreichend hoch ist, wird das Ventil geschaltet. Nach einem durchgeführten Schaltvorgang fließt Fluid solange durch das Ventil, bis der aus der Zuleitung aufgebrachte Druck für ein Halten des zumindest einen Ventilkörpers in geöffnetem Zustand nicht mehr ausreichend hoch ist.

Im Folgenden wird die Erfindung anhand beispielhafter Ausführungsformen unter Bezugnahme auf die beiliegenden Figuren näher beschrieben. Hierbei zeigt:
- Fig. 1: eine Querschnittsansicht eines vorbekannten Ventils,
- Fig. 2: eine Querschnittsansicht eines Ventils gemäß einer bevorzugten Ausführungsform,
- Fig. 3: eine Querschnittsansicht eines Ventils gemäß einer bevorzugten Ausführungsform in einer alternativen Schaltstellung,
- Fig. 4: eine Querschnittsansicht eines Ventils gemäß einer bevorzugten Ausführungsform in einer weiteren alternativen Schaltstellung; und
- Fig. 5: eine Querschnittsansicht eines Ventils gemäß einer weiteren bevorzugten Ausführungsform.
- Fig. 6: zeigt eine Querschnittsansicht einer bevorzugten Ausführungsform der vorliegenden Erfindung, und
- Fig. 7: zeigt eine weitere Querschnittsansicht des Ventils aus Fig. 6.

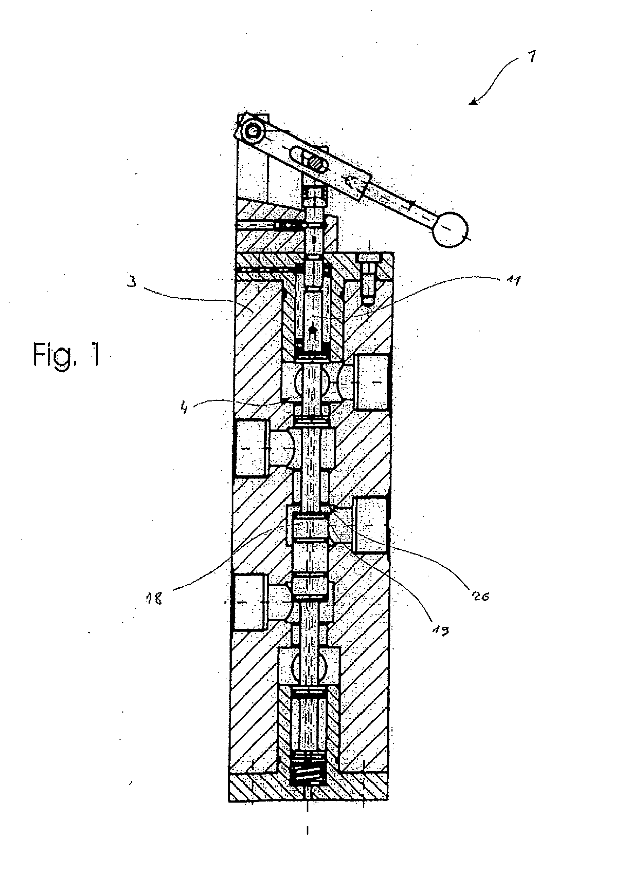

Anhand Figur 1 werden die Nachteile eines Mehrwegeventils herkömmlicher Bauart deutlich. Das Ventil 1 weist einen Grundkörper 3 auf, in welchem im Wesentlichen mittig angeordnet ein Hohlraum 4 vorgesehen ist, der sich durch die gesamte Länge des Grundkörpers 3 erstreckt.

Ein Ventilschieber 11 erstreckt sich durch einen Hohlraum 4 und weist mehrere Ventil-Abschnitte 18 auf, die jeweils mit einem Dichtelement 19 versehen sind und mittels dieses Dichtelementes 19 axial beweglich mit der Wand des Hohlraums 4 in Kontakt stehen.

Währens des Öffnen und Schließen der Ventile durch Bewegung des Schiebers 11 werden die Dichtelemente 19 an Kanten 26 vorbeibewegt und hierbei einer beträchtlichen Scherbeanspruchung ausgesetzt. Das führt unweigerlich zum beschleunigten Verschleiß der Dichtelemente 19 und verkürzt die Wartungsintervalle eines Ventils der gezeigten Bauart beträchtlich.

Weiterhin ist der axiale Bewegungsspielraum des Schiebers 11 bauartbedingt begrenzt. Je größer die Zahl der in einem solchen Ventil ausgeführten Schaltwege wird, desto exakter müssen die Ventil-Abschnitte auf dem Antriebselement, und die Einlass- und Auslassöffnungen im Grundkörper 3 angeordnet und aufeinander abgestimmt sein, um eine korrekte Funktion aller Schaltwege zu gewährleisten.

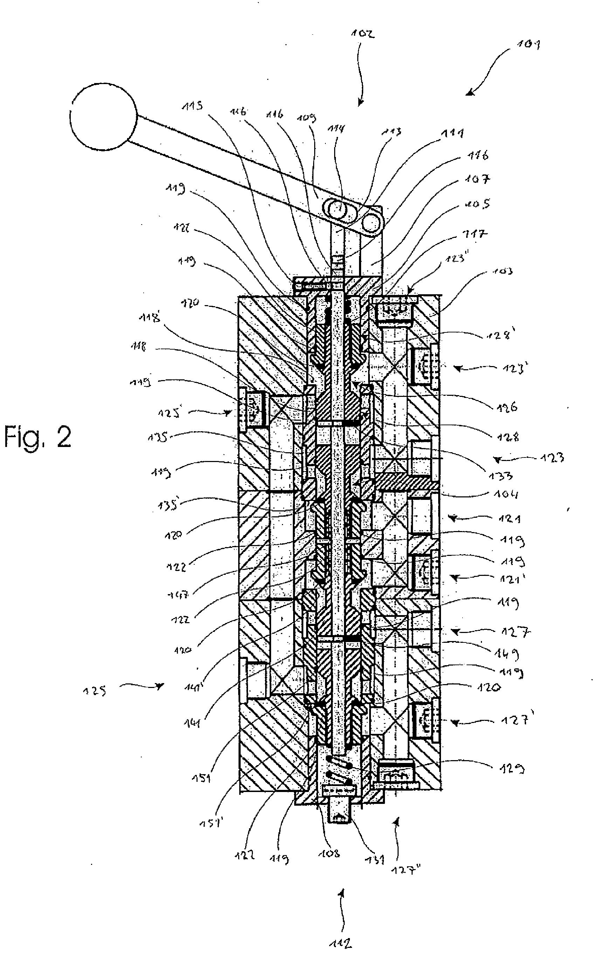

Eine bevorzugte Ausführungsform eines erfindungsgemäßen Ventils 101 ist in den Figuren 2,3 und 4 jeweils in einer Querschnittsansicht dargestellt. Anhand von Figur 2 soll zunächst der Aufbau der bevorzugten Ausführungsform erläutert werden.

Das Ventil 101 weist einen Grundkörper 103 auf. Der Grundkörper 103 ist mit einem Hohlraum 104 versehen, welcher auf einer Seite 102 des Ventils 101 von einem Gehäusetopf 105 verschlossen ist, und auf einer anderen Seite 112 des Ventils 101 von einem Gehäusetopf 108 verschlossen ist. Ein Kopfteil 107 ist mit dem Gehäusetopf 105 (in nicht dargestellter Weise) verbunden. Ein Schwenkarm 109 ist rotierend mit dem Kopfteil 107 verbunden und weist ein Langloch 113 auf. In montiertem Zustand befindet sich mit dem Langloch 113 ein Zapfen 114 in Eingriff, welcher fest mit einem Antriebselement 111 verbunden ist. In der dargestellten Ausführungsform ist das Antriebselement 111 als im Wesentlichen zylindrische Stange ausgebildet. Das Antriebselement 111 ist durch schwenkende Bewegung des Schwenkarms 109 axial bewegbar. Die axiale Position des Antriebselementes 111 ist in drei verschiedenen Schaltstellungen arretierbar. Die Arretierungsmittel sind durch eine Kugeldruckfeder 115 sowie durch drei axial beabstandete auf dem Antriebselement vorgesehenen Nuten 116 ausgebildet. In einer Schaltstellung befindet sich die Kugeldruckfeder im Eingriff mit einer der Nuten 116.

Der Grundkörper 103 weist weiterhin eine Mehrzahl Öffnungen 121, 121', 123, 123', 123", 125, 125', 127, 127', 127" auf, die jeweils in Abhängigkeit des Fluid-Flusses durch das Ventil hindurch als Ein- und/oder Auslässe ausgebildet sind. Die Öffnungen 123, 123' und 123" sind miteinander über eine Durchgangsbohrung verbunden, und in der gewählten Darstellung sind die Öffnungen 123' und 123" verschlossen. Die Öffnungen 121 und 121' sind ebenfalls über eine Durchgangsbohrung miteinander verbunden, und in der gewählten Darstellung ist die Öffnung 121' verschlossen. Weiterhin sind die Öffnungen 125 und 125' über eine Durchgangsbohrung miteinander verbunden, wobei in der gewählten Darstellung nie wieder von einer 125' verschlossen ist. Die Öffnungen 127, 127' sowie 127" sind ebenfalls miteinander verbunden, hier sind die Öffnungen 127' und 127" in der gewählten Darstellung verschlossen. Die Öffnungen 121, 121', 123, 123', 123", 125, 125', 127, 127', 127" münden in dem Hohlraum 104 an unterschiedlichen Positionen.

Das axialbewegliche Antriebselement 111 ist im Wesentlichen zentral im Hohlraum 104 angeordnet. Ein Ventilkörper 118 ist in Form eines im Wesentlichen rotationssymmetrischen Bauteils ausgebildet und so im Hohlraum 4 angeordnet, dass sich das als Stange ausgebildete Antriebselement 111 durch eine im Wesentlichen zentral im Ventilkörper angeordnete Durchgangsbohrung hindurch erstreckt. Der Ventilkörper 118 weist einen Abschnitt mit verringertem Querschnitt 116 sowie einen Abschnitt mit vergrößertem Querschnitt 128 auf. Ein Dichtelement 120 ist mittels einer Schraubhülse 122 an dem Ventilskörper befestigt. Die Schraubhülse weist einen Dicht-Abschnitt 128' auf. Der Durchmesser der Schraubhülse 122 in dem Dicht-Abschnitt 128' ist im Wesentlichen gleich dem Innendurchmesser des Gehäusetopfes 105. Zwischen dem Dicht-Abschnitt 128' und der inneren Fläche des Gehäusetopfes 105 ist ein Dichtelement 119 vorgesehen. Zwischen dem Abschnitt mit vergrößertem Querschnitt 128 und der Wand des Hohlraums 104 ist ebenfalls ein Dichtelement 119 vorgesehen. Dem Ventilkörper 118 ist ein Ventilsitz 118' zugeordnet, welcher als Absatz in dem Hohlraum 104 des Grundkörpers 103 ausgebildet ist. Ein erstes Federelement 117 ist ebenfalls im Hohlraum 104 angeordnet. Das Federelement 117 ist in der gewählten Darstellung als Schraubenfeder ausgebildet und stützt sich gegen den Gehäusetopf 105 einerseits sowie gegen den Ventilkörper 118 andererseits ab.

Auf dem Antriebselement 111 ist in der dargestellten Orientierung unterhalb der Position des Ventilkörpers 118 ein als Mitnehmer 133 ausgebildetes Kopplungsmittel befestigt. Der Mitnehmer 133 ist in dem dargestellten Ausführungsbeispiel als Spannring ausgeführt. In dem in der gewählten Orientierung unteren Teil des Ventils 101 ist innerhalb des Hohlraums 104 weiterhin ein zweiter Ventilkörper 151 angeordnet. Die Form des Ventilkörpers 151 entspricht der Form des Ventilkörpers 118. Der Ventilkörper ist allerdings in dem Ventilkörper 118 entgegengesetzter Orientierung gleitbar auf dem Antriebselement 111 angeordnet. Ein Dichtelement 120 ist mittels einer Schraubhülse 122 in gleicher Weise wie beidem Ventilkörper 118 mit dem Ventilkörper 151 verschraubt. Der Ventilkörper 151 ist ein Ventilsitz 151' zugeordnet. Der Ventilsitz 151' ist als Absatz im Hohlraum 104 ausgebildet. Der Ventilsitz 151' befindet sich in gezeigter Schaltstellung im dichtenden Kontakt mit dem Dichtelement 120. Eine Spannschraube 131 befindet sich im Eingriff mit dem Gehäusetopf 108. Ein als Schraubenfeder ausgebildetes zweites Federelement 129 ist im Hohlraum 104 zwischen dem zweiten Ventilkörper 151 und der Spannschraube 129 angeordnet. Die Spannschraube 131 ist zum Erhöhen oder Verringern der Federvorspannung des zweiten Federelementes 129 ausgebildet.

In der dargestellten Orientierung oberhalb des zweiten Ventilskörpers 151 ist an dem Antriebselement 111 ein als Mitnehmer 149 ausgebildetes Kopplungsmittel befestigt. Im gewählten Ausführungsbeispiel ist der Mitnehmer 149 als Spannring ausgebildet. Zwischen dem ersten Mitnehmer 133 und dem zweiten Mitnehmer 149 sind im Hohlraum 104 ein dritter Ventilkörper 135 sowie ein vierter Ventilkörper 141 angeordnet. Dem dritten Ventilkörper 135 ist ein Ventilssitz 135' zugeordnet, der als Absatz im Hohlraum 104 ausgebildet ist. Weiterhin ist in dem vierten Ventilkörper ein Ventilsitz 141' zugeordnet, der ebenfalls als Absatz im Hohlraum 104 ausgebildet ist. Der dritte Ventilkörper 135 ist in der gewählten Ausführungsform in gleicher Weise wie der zweite Ventilkörper 151 ausgerichtet. Der vierte Ventilkörper 141 ist in gleicher Weise wieder erste Ventilkörper 118 ausgerichtet. Die Form des dritten und vierten Ventilkörpers 135, 141 entspricht der Form des ersten und zweiten Ventilkörpers in dem gewählten Ausführungsform. Sowohl der dritte als auch der vierte Ventilkörper sind mit einem Dichtelement 120 bestückt, welches mittels einer Schraubhülse an dem jeweiligen Ventilskörper befestigt ist. Der dritte Ventilkörper 135 und der vierte Ventilkörper 141 sind axial begleitend auf dem Antriebselement 111 angeordnet und durch ein drittes Federelement 147, welches als Schraubenfeder ausgebildet ist, miteinander verbunden.

Die Funktionsweise des erfindungsgemäßen Ausführungsbeispiels soll anhand des Vergleiches der Figuren 2, 3 und 4 erläutert werden. In Figur 2 ist das Mehrwegeventil so geschaltet, dass Fluid durch die Öffnung 121 in das Ventil eintritt, den geöffneten Ventilsitz 141' passiert und zu der Öffnung 127 gelangt, durch welche es aus dem Ventilkörper austritt. Ein Fluidstrom in eine entgegengesetzte Richtung ist ebenfalls möglich. Weiterhin tritt in dieser Ventilstellung Fluid durch die Öffnung 2a in das Ventil ein, passiert den Ventilssitz 118', und gelangt zu der Öffnung 123, durch welche es den Ventilkörper verlässt. Auch hier ist ein Fluidstrom in umgekehrter Richtung möglich. Der so gestaltete Fluss von Fluid durch das Ventil wird ermöglicht, indem über dem Schwenkhebel das Antriebselement in eine obere Endstellung gebracht wird (dargestellt in Figur 2). Der erste Ventilkörper wird von dem ersten Mitnehmer 133 gegen den Druck des ersten Federelementes 117 in der gezeigten Stellung gehalten. Der Ventilssitz 118' ist geöffnet. Der zweite Ventilkörper wird vom zweiten Federelement 129 gegen den Ventilsitz 151' gepresst und verschließt diesen. Der dritte Ventilkörper 130 wird von dem dritten Federelement 147 gegen den Ventilssitz 135' gepresst und verschließt diesen. Der vierte Ventilkörper 141 ist in der in Figur 2 gezeigten Stellung vom zweiten Mitnehmer 149 erfasst und wird so in der dargestellten Position gehalten. Dadurch ist der Ventilsitz 141' geöffnet.

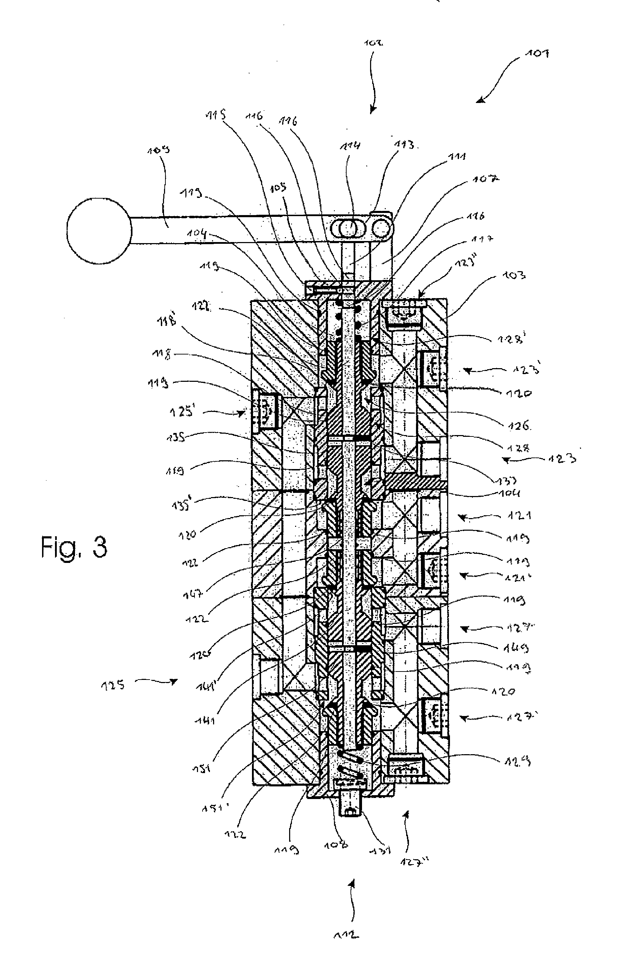

Wird der Schwenkarm 109 nun von der in Figur 2 gezeigten Schaltstellung in die in Figur 3 gezeigte Schaltstellung bewegt, senkt sich der erste Ventilkörper nicht komplett bis zum Erreichen des ersten Ventilsitzes 118'. Er wird zwar von dem ersten Federelement 117 in Richtung des ersten Ventilssitzes 118' gedrückt, die Position des ersten Mitnehmers 133 ist allerdings noch nicht ausreichend weit verschoben. Der Ventilssitz 118' bleibt somit in dieser Stellung geöffnet. Der zweite Ventilkörper wird beim Bewegen des Schwenkarms 109 von der Schaltposition aus Figur 2 in Richtung der Schaltposition in Figur 3 durch den zweiten Mitnehmer 149 von dem zweiten Ventilsitz 151' wegbewegt und nach Erreichen der Schaltstellung in Figur 3 vom zweiten Mitnehmer 149 in der dargestellten Position gehalten. Der Ventilsitz 151' ist somit geöffnet. In der Schaltstellung, welche in Figur 3 abgebildet ist, sind weder der dritte Ventilkörper 135 noch der vierte Ventilkörper 141 von dem ersten Mitnehmer 133 oder dem zweiten Mitnehmer 149 erfasst, und werden durch das dritte Federelement 147 auseinander gedrückt. Dies hat zur Folge, dass der dritte und vierte Ventilsitz von dem dritten bzw. vierten Ventilkörper verschlossen werden. In der in Figur 3 dargestellten Schaltstellung ist auf diese Weise ein Fluidfluss zwischen den Öffnungen 125 und 127 einerseits sowie zwischen den Öffnungen 125 und 123 andererseits möglich.

Unter der Annahme, dass die in Figur 3 gezeigte Schaltstellung mit einer geringfügig veränderten Anordnung des ersten Mitnehmers 133 und zweiten Mitnehmers 149 derart verwirklicht wird, dass in der gezeigten Schaltstellung weder der erste noch der zweite Mitnehmer 133, 149 in Kontakt mit einem der Ventilkörper stehen, so würden das erste Federelement 117 den Ventilkörper 118 gegen den Ventilssitz 118' und das zweite Federelement 129 den zweiten Ventilkörper 151 gegen den zweiten Ventilssitz 151' drücken, da sie nicht von den Mitnehmern daran gehindert würden. In diesem Falle wären alle Fluidwege blockiert.

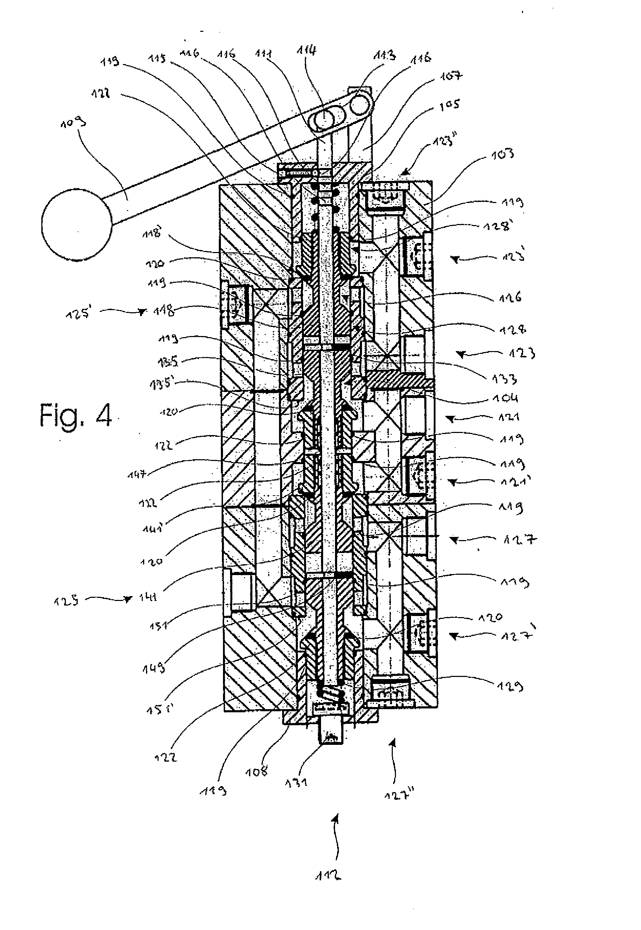

Wenn nun der Schwenkarm 109 von der in Figur 3 gezeigten Schaltstellung weiter in Richtung der in Figur 4 gezeigten Schaltstellung bewegt wird, verliert der erste Mitnehmer 133 den Kontakt zu dem Ventilkörper 118, woraufhin sich dieser in Folge der Federkraft des ersten Federelementes 117 gegen den ersten Ventilssitz 118' bewegt und diesen verschließt. Bei weiterer Bewegung des Antriebselementes durch den Schwenkarm nimmt der erste Mitnehmer 133 Kontakt zu dem dritten Ventilkörper 135 auf, komprimiert das dritte Federelement 147 und öffnet auf diese Weise den Ventilssitz 135'. Der zweite Ventilsitz wird durch den zweiten Mitnehmer 149 in Richtung des Gehäusetopfes 108 verschoben und öffnet auf diese Weise den Ventilssitz 151'. In der in Figur 4 gezeigten Schaltstellung ist nach Erreichen der Schaltposition ein Fluidfluss von Öffnung 125 zu Öffnung 127 möglich, sowie von Öffnung 121 zu Öffnung 123. Ebenso ist selbstverständlich ein Fluidfluss in die jeweils umgekehrte Richtung möglich.

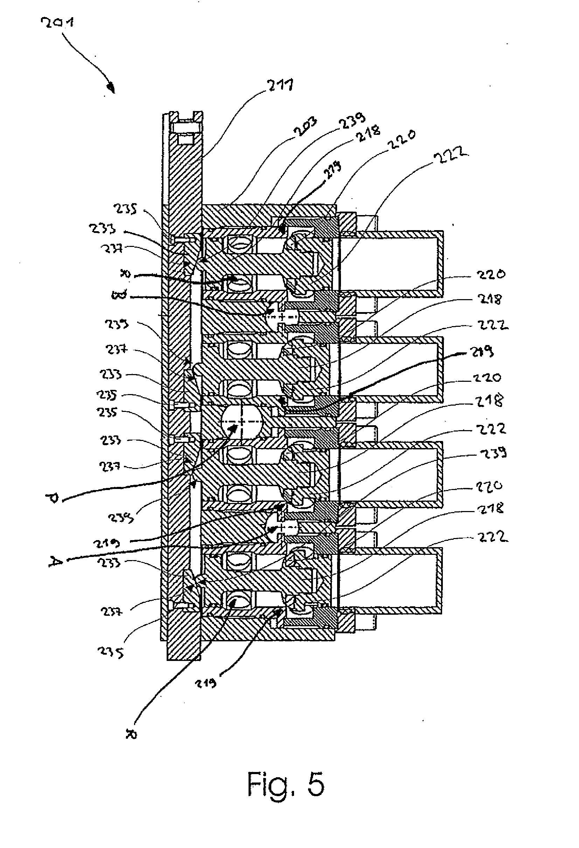

In Figur 5 ist ein erfindungsgemäßes Ventil gemäß einer weiteren bevorzugten Ausführungsform dargestellt. Im Unterschied zu den erfindungsgemäßen Ventilen der Figuren 1 bis 4 sind in diesem Ausführungsbeispiel die Kopplungsmittel nicht als Mitnehmer, sondern als Verdränger ausgebildet. Das hier abgebildete Ventil 201 weist ein Gehäuse 203 auf, durch welches sich ein Antriebselement 211 erstreckt. Insgesamt vier Verdränger 233 sind mit Befestigungsmitteln 235, die in diesem Fall als Schraubenverbindungen ausgebildet sind, an dem Antriebselement 211 befestigt und weisen eine Kontaktfläche 237 auf, die einen konstanten Steigungswinkel in Bezug auf die Bewegungsrichtung des Antriebselementes aufweist. Insgesamt vier Ventilkörper 218 sind so in dem Gehäuse 203 angeordnet, dass sie in im Wesentlichen senkrechter Richtung zur Bewegungsrichtung des Antriebselementes 211 bewegbar sind. Die Ventilkörper verschließen einen Ventilsitz 219, der mit einem Dichtelement 220 in dichtenden Kontakt brinbar ist. Das Dichtelement 220 ist mit einer Hülse 222 auf dem Ventilkörper 218 gesichert. Die Hülse 222 ist auf den Ventilkörper aufgeschraubt. Die Ventilkörper 218 weisen einen Kontaktabschnitt 239 auf, der in der dargestellten Ausführungsform einen im Wesentlichen halbrunden Querschnitt aufweist. Der Kontaktabschnitt 239 befindet sich in Kontakt mit der Kontaktfläche 237 des Verdrängers 233.

Wird nun das Ventil 201 in der in Figur 5 gezeigten Orientierung derart betätigt, dass das Antriebselement 211 abwärts bewegt wird, bewirkt der in der gewählten Orientierung oberste Verdränger 233 ein seitliches Ausweichen des Ventilkörpers 218, dessen Kontaktabschnitt 239 von dem Verdränger 233 verdrängt wird. Durch die Ausweichbewegung des Ventilkörpers wird der Kontakt zwischen dem Ventilsitz 219 und dem Dichtelement 220 gelöst, was ein Öffnen des Ventils zur Folge hat. Durch die in diesem Ausführungsbeispiel gewählte Kontaktfläche 237 mit konstantem Steigungswinkel öffnet sich das Ventil bei konstanter Bewegungsgeschwindigkeit des Antriebselementes 211 ebenfalls mit konstanter Geschwindigkeit. Der Ventilkörper 218, der in der gewählten Orientierung des Ventils 201 in Figur 5 an zweiter Stelle von unten abgebildet ist, verhält sich bei einer abwärts gerichteten Bewegung des Antriebselements 211 in gleicher Weise, wie der soeben beschriebene oberste Ventilkörper 218. Das gleiche Verhalten gilt in umgekehrter Weise für die Ventilkörper 218, die in der gewählten Orientierung des Ventils 201 in Figur 5 an unterster Stelle bzw. an der zweiten Stelle von oben abgebildet sind. Eine Öffnung der Ventile wird durch ein Aufwärtsbewegen des Antriebselements 211 erreicht, und ein abwärts gerichtetes Bewegen des Antriebselements 211 bewirkt ein Schließen der Ventile. Nachfolgend werden die Kommunikationswege der Ventilöffnungen untereinander erläutert.

Befindet sich das Antriebselement 211 in der Ausführungsform, wie sie in Figur 5 dargestellt ist, in einer mittleren Stellung entsprechend der Ventilstellung des Ausführungsbeispiels aus Figur 3, sind die Ventilsitze 219 der Ventile V2 und V3 geschlossen, während die Ventilsitze 219 der Ventile V1 und V4 geöffnet sind. Kammern A, B und R sind in dieser Stellung fluidleitend miteinander verbunden.

Befindet sich das Antriebselement 211 in einer oberen Stellung entsprechend der Stellung des Ausführungsbeispiels aus Figur 2, sind die Venilsitze 219 der Ventile V1 und V3 geschlossen, während die Ventilsitze 219 der Ventile V2 und V4 geöffnet sind. In dieser Stellung sind eine Kammer P mit der Kammer B sowie die Kammer A mit der Kammer R fluidleitend verbunden.

Befindet sich das Antriebselement 211 in einer unteren Stellung entsprechend der Stellung des Ausführungsbeispiels aus Figur 4, sind die Ventilsitze 219 der Ventile V1 und V3 geöffnet, während die Ventilsitze 219 der Ventilsitze V2 und V4 geschlossen sind. In dieser Stellung sind die Kammern P und A sowie die Kammern B und R fluidleitend miteinander verbunden.

Die Kammern A, B, P und R sind jeweils wahlweise mit (nicht dargestellten) Anschlussöffnungen verbunden, so dass je nach Schaltstellung des Antriebselements 211 der Ausführungsform aus Figur 5 die gleichen Schaltwege realisierbar sind wie in den Ausführungsformen der Figuren 2, 3 und 4.

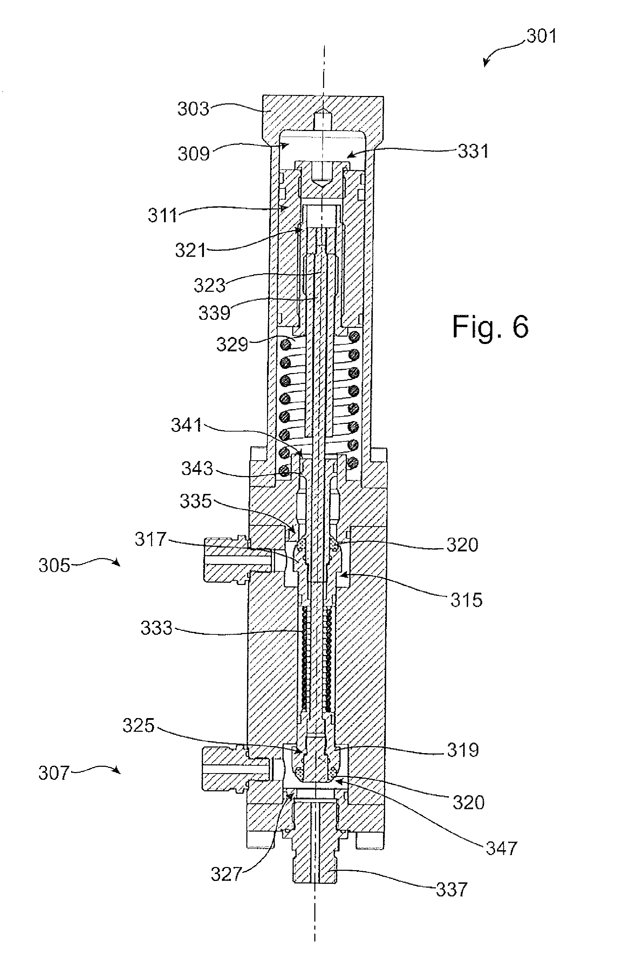

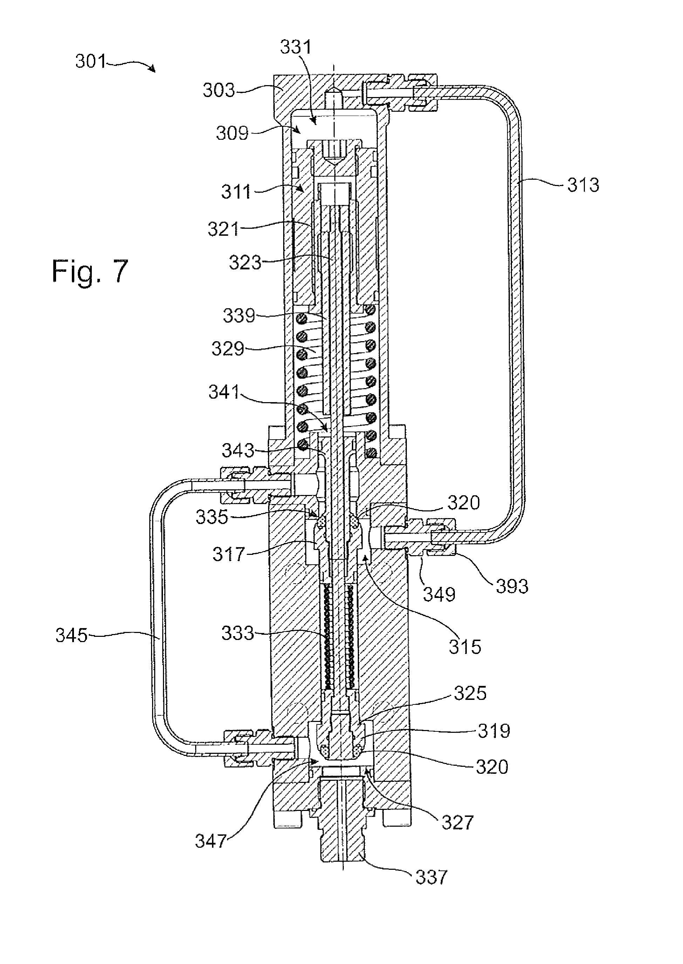

Das in Figur 6 gezeigte Ventil 301 weist einen Grundkörper 303 auf, der aus mehreren, miteinander verklebten Abschnitten besteht. Das Ventil 301 weist einen mit einer Zuleitung verbindbaren Einlass 305 und einen mit einer zu einem Verbraucher führenden Leitung verbindbaren Auslass 307 auf. In einem Hohlraum 309 in einem oberen Abschnitt des Ventils 301 ist ein im Wesentlichen zylindrischer Kolben 311 angeordnet, der entlang der Längsachse des Ventils bewegbar ist. Aus Figur 7 ist zu entnehmen, dass der Hohlraum 309 mittels einer Druckleitung 313 mit einem Einlassraum 315 in Verbindung steht, welcher wiederum mit dem Einlass 305 in fluidleitender Verbindung steht. Die Zuleitung ist somit auch in druckleitender, fluidleitender Verbindung mit dem Hohlraum 309. Der Kolben 311 ist als Kupplungsmittel zum Bewegen von Ventilkörpern 317, 319 ausgebildet: In Figuren 6 und 7 ist zu erkennen, dass der Kolben in einem oberen Abschnitt mit einer Stange 323 verbunden ist. Die Stange 323 weist in einem unteren Abschnitt eine Nase 325 auf, welche mit dem unteren Ventilkörper 319 in Anschlag bringbar ist. Befinden sich die Nase 325 und der korrespondierende Abschnitt des Ventilkörpers 319 in Anschlag, und wird die Stange 323 in der in Figuren 6 und 7 gezeigten Orientierung aufwärts bewegt, bewegt sich auch der Ventilkörper 319 im Einklang mit der Stange aufwärts, was dazu führt, dass ein Ventilsitz 327, welchem der Ventilkörper 319 zugeordnet ist, geöffnet wird. Eine solche aufwärtsgerichtete Bewegung resultiert aus einem Abfallen des Drucks in dem Hohlraum 309. Wenn der Druck in dem Hohlraum 309 soweit abgefallen ist, dass die von einer Druckfeder 329 ausgeübte Druckkraft größer ist als die resultierende Kraft auf der Stirnfläche 331 des Kolbens 311, wird der Kolben 311 nach oben bewegt.

Der Ventilkörper 317 ist axial frei beweglich relativ zu der Zugstange angeordnet. Er ist mittels einer Druckfeder 333 mit dem Ventilkörper 319 gekoppelt, so dass er mittels der von der Druckfeder 333 ausgeübten Kraft in Richtung eines Ventilsitzes 335 gedrückt wird und diesen somit verschließt.

In der in den Figuren 6 und 7 gezeigten Stellung ist der Ventilsitz 335 geschlossen, und der Ventilsitz 327 ist geöffnet. In dieser Stellung wird das in den Figuren 6 und 7 gezeigte Ventil entleert bzw. entlüftet. Fluid kann aus dem Verbraucher durch den Auslass 307 zurückfließen und anschließend aus einem Entleerungs-Auslass 337 austreten.

Das Ventil der Figuren 6 und 7 kann aus der gezeigten Stellung in eine alternative Betriebsstellung gebracht werden, indem durch die Zuleitung und den Einlass 305 ein druckbeaufschlagtes Fluid in den Einlassraum 315 gedrückt wird. Infolgedessen steigt auch der Fluiddruck in dem Hohlraum 309, und somit steigt auch die resultierende Druckkraft in Abwärtsrichtung auf den Kolben 311. Sobald die Druckkraft größer ist als die von der Druckfeder 329 ausgeübte Kraft, wird der Kolben 311 abwärts bewegt. Der Ventilkörper 319 wird ebenfalls abwärts bewegt und verschließt in einer Endstellung den Ventilsitz 327 und somit auch den Entleerungsauslass 337. Der Ventilkörper 317 wird dann abwärts bewegt, wenn infolge der Abwärtsbewegung des Kolbens 311 ein im Wesentlichen zylindrischer Mitnehmer 339 mit einer Stirnfläche 341 eines mit dem Ventilkörper 317 verbundenen Stempels 343 in Anschlag gebracht wird. Bei fortgesetzteer Abwärtsbewegung des Kolbens 311 wird nun der Ventilkörper 317 ebenfalls im Einklang abwärts bewegt. Der Ventilsitz 335 wird geöffnet und Fluid kann von dem Einlass 305 in eine Druckleitung 345 fließen, mittels welcher das Fluid in einen Auslass-Hohlraum 347 strömt. Von diesem Auslass-Hohlraum 347 wird das Fluid weiterhin durch den Auslass 307 zu dem Verbraucher gefördert.

Die Ventilkörper 317, 327 sind wie auch die Ausführung in den Figuren 1 und 4 mit im Wesentlichen kegelförmigen Dichtelementen 320 bestückt. Die Druckleitungen sind mittels Anschlussstücken 349 und Überwurfmuttern 351 mit den jeweiligen Anschlüssen des Ventils verbunden. Der Kolben 311 sowie die Ventilkörper 317, 327 und der Stempel 343 sind weiterhin mit (nicht dargestellten) Dichtelementen versehen, welche ein Durchtreten von Fluid in axialer Richtung verhindern.

### Weitere Ausführungsbeispiele

Gemäß einer vorteilhaften Weiterbildung des erfindungsgemäßen Ventils ist ein dritter Ventilkörper, der einem dritten Ventilsitz zuordenbar ist, durch Kopplungsmittel mit dem Antriebselement verbunden und zu diesem relativ bewegbar. Durch Integration des dritten Ventilkörpers und des dritten Ventilsitzes ist das erfindungsgemäße Ventil als ein Dreiwege-Sitzventil ausgebildet.

In einer weiteren Ausführungsform der Erfindung ist der erste Mitnehmer an dem Antriebselement ausgebildet, um in mindestens einer Stellung des Ventils mit dem dritten Ventilkörper in Kontakt bringbar zu sein. Die Anordnung des ersten Mitnehmers zwischen dem ersten und dritten Ventilkörper ist vorteilhaft, um durch Bewegung des ersten Mitnehmers in eine Richtung eine Steuerung des ersten Paares Ventilkörper/Ventilsitz vorzunehmen, und durch die Bewegung des ersten Mitnehmers in eine zweite Richtung eine Steuerung des dritten Paares Ventilkörper/Ventilsitz vorzunehmen.

In einer vorteilhaften Weiterbildung des erfindungsgemäßen Ventils sind die Kopplungsmittel weiterhin in Form eines zweiten Mitnehmers an dem Antriebselement ausgebildet sind, welcher in mindestens einer Stellung des Ventils mit dem zweiten Ventilkörper in Kontakt bringbar ist. Durch eine geeignete Bewegung des Antriebselements wird der zweite Mitnehmer in Kontakt mit dem zweiten Ventilkörper gebracht und bewirkt bei einer Weiterbewegung des Antriebselements das Öffnen der Paarung zweiter Ventilkörper/zweiter Ventilsitz. Der Kontakt und die Kraftübertragung zwischen dem zweiten Ventilkörper und dem zweiten Mitnehmer erfolgt auf vorteilhafte Weise durch Formschluss, da auf diese Weise hohe Übertragungskräfte aufgenommen werden können. Für Anwendungen, in denen besonders langsames Öffnen und/oder Schließen des Ventils gefordert ist, kann allerdings mittels Haft- oder Gleitreibung Kraft von dem zweiten Mitnehmer auf den zweiten Ventilkörper übertragen werden.

In einer weiteren Ausführungsform der Erfindung ist mindestens ein drittes Feder-Element mittels Kraftwirkung zur Herstellung des Kontakts zwischen dem dritten Ventilkörper und dem dritten Ventilsitz und/oder dem ersten Mitnehmer ausgebildet und zwischen dem zweiten Mitnehmer und dem dritten Ventilkörper angeordnet. Das dritte Federelement ist in vorteilhafter Anordnung dazu ausgebildet, eine vom dritten Ventilkörper zum dritten Ventilsitz hin gerichtete Kraft auszuüben.
Aufgrund dieser Kraftausübung wird der dritte Ventilkörper gegen den dritten Ventilsitz gepresst. Die Paarung dritter Ventilkörper/dritter Ventilsitz ist somit stets verschlossen, bis der erste Mitnehmer durch das Antriebselement mit dem dritten Ventilkörper in Kontakt gebracht wird und entgegen der Wirkrichtung des dritten Federelements arbeitet, was in einer teilweisen oder vollständigen Öffnung der Paarung dritter Ventilkörper/dritter Ventilsitz führt.

Gemäß einer vorteilhaften Weiterbildung des erfindungsgemäßen Ventils ist das dritte Federelement zwischen dem Gehäuse und dem dritten Ventilkörper angeordnet. Durch die Anordnung des dritten Federelements mit Kontakt zum Gehäuse wird die Wirkungsweise des dritten Federelements im Zusammenwirken mit der Paarung dritter Ventilsitz/dritter Ventilkörper auch dann gewährleistet, wenn beispielsweise aufgrund der Bauart oder des Platzangebots im Inneren des Ventils eine Anordnung des dritten Federelements zwischen dem zweiten Mitnehmer und dem dritten Ventilkörper nicht möglich ist.

In einer weiteren vorteilhaften Ausführungsform der Erfindung ist ein vierter Ventilkörper, der einem vierten Ventilsitz zuordenbar ist, durch Kopplungsmittel mit dem Antriebselement verbunden und zu diesem relativ bewegbar. Durch Integration des vierten Ventilkörpers und des vierten Ventilsitzes ist das erfindungsgemäße Ventil als ein Vierwege-Sitzventil ausgebildet.

Die Anordnung des zweiten Mitnehmers zwischen dem zweiten und vierten Ventilkörper ist vorteilhaft, um durch Bewegung des zweiten Mitnehmers in eine Richtung eine Steuerung des Paares zweiter Ventilkörper/zweiter Ventilsitz vorzunehmen, und durch die Bewegung des zweiten Mitnehmers in eine zweite Richtung eine Steuerung des Paares vierter Ventilkörper/vierter Ventilsitz vorzunehmen.
In einer vorteilhaften Ausführungsform des erfindungsgemäßen Ventils ist der zweite Mitnehmer an dem Antriebselement ausgebildet, um in mindestens einer Stellung des Ventils mit dem vierten Ventilkörper in Kontakt bringbar zu sein. Durch eine geeignete Bewegung des Antriebselements wird der zweite Mitnehmer in Kontakt mit dem vierten Ventilkörper gebracht und bewirkt bei einer Weiterbewegung des Antriebselements das Öffnen der Paarung vierter Ventilkörper/vierter Ventilsitz. Der Kontakt und die Kraftübertragung zwischen dem vierten Ventilkörper und dem zweiten Mitnehmer erfolgt auf vorteilhafte Weise durch Formschluss, da auf diese Weise hohe Übertragungskräfte aufgenommen werden können. Für Anwendungen, in denen besonders langsames Öffnen und/oder Schließen des Ventils gefordert ist, kann allerdings mittels Haft- oder Gleitreibung Kraft von dem zweiten Mitnehmer auf den vierten Ventilkörper übertragen werden.

In einer Weiterbildung der Erfindung ist mindestens ein drittes Feder-Element mittels Kraftwirkung zur Herstellung des Kontakts zwischen:
dem dritten Ventilkörper einerseits und dem dritten Ventilsitz und/oder dem ersten Mitnehmer andererseits,
dem vierten Ventilkörper einerseits und dem vierten Ventilsitz und/oder dem zweiten Mitnehmer andererseits ausgebildet ist, und
zwischen dem dritten Ventilkörper und dem vierten Ventilkörper angeordnet. Diese Ausführungsform bietet den Vorteil, dass das dritte Federelement gleichzeitig in Richtung des Paares dritter Ventilkörper/dritter Ventilsitz sowie in Richtung vierter Ventilkörper/vierter Ventilsitz wirkend angeordnet ist. In einer derartigen Anordnung sind der dritte und vierte Ventilkörper durch ein gemeinsames Federelement gegeneinander abgestützt, was zu einer Bauteilreduzierung und somit auch zu einer Reduzierung des Herstellungsaufwandes beiträgt.

In einer vorteilhaften Ausführungsform der vorliegenden Erfindung sind die Feder-Elemente als Schraubenfedern ausgebildet. Schraubenfedern werden als vorteilhaft angesehen, da sie in einer Vielzahl von Baugrößen und mit nahezu beliebigen Federkonstanten verfügbar sind. Durch die geeignete Dimensionierung der Federelemente können für jede Paarung Ventilsitz/Ventilkörper individuelle Schließkräfte vorgesehen werden.

In einer weiteren vorteilhaften Ausführungsform des erfindungsgemäßen Ventils sind die Federelemente als Magneten ausgebildet, und die Ventilkörper weisen auf einer dem Magneten zugewandten Seite eine magnetische Fläche mit einer dem Magneten gleichen Polung auf. Die Kraftwirkung auf die Ventilkörper und Ventilsitze wird in dieser Ausführungsform dadurch erreicht, dass sich die gleich gepolten und einander zugewandten Flächen der benachbarten Bauteile von einander abstoßen. Es wird als vorteilhaft angesehen, dass die Kraftwirkung berührungsfrei auftritt. In Betracht zu ziehen ist der Einsatz von Permanentmagneten als auch von elektrisch magnetisierbaren Metallen. Letztere weisen den weiteren Vorteil einer Möglichkeit der Verstärkung der Magnetkraft durch Anlegen eines elektrischen Stroms auf.

In einer weiteren vorteilhaften Ausführungsform sind die Ventilkörper im Wesentlichen rotationssymmetrisch ausgebildet sind und weisen an ihrer äußeren Mantelfläche Abschnitte mit verringertem Durchmesser auf, die von Flächen begrenzt sind, welche zusammen mit einer Wand des Hohlraums einen Durchtrittskanal für das zu leitende Fluid bilden. Auf diese Weise wird in dem Ventil ein Durchtrittskanal für den zu steuernden Fluidstrom durch den Ventilkörper und die Wandfläche des Hohlraums definiert und begrenzt. Es ist nicht notwendig, weitere Leitungskanäle im Inneren des Ventils vorzusehen, insbesondere wenn die Ein-und Auslässe jeweils direkt in den Hohlraum in einem Abschnitt einmünden, in welchem ein Ventilsitz angeordnet ist.

In einer bevorzugten Ausführungsform der Erfindung sind Dichtelemente lösbar an den Ventilkörpern befestigt. Dichtelemente unterstützen die Abdichtung der Ventilsitze. Vorteilhafterweise sind die Dichtelemente so an dem Ventilkörper angeordnet, dass sie in geschlossenem Zustand der Ventilpaarung mit der Kontaktfläche des Ventilsitzes in Berührung sind und eine der Flächenkontur angepasste Oberfläche aufweisen. Dichtelemente aus Polyoximethylen (POM), Teflon (Polytetrafluorethylen - PTFE) oder Polyamid (PA) werden als geeignet angesehen, aber auch andere Materialien wie beispielsweise Kautschuk oder Silikon sind je nach Einsatzzweck des Ventils denkbar.

In einer weiteren vorteilhaften Ausführungsform des erfindungsgemäßen Ventils weisen die Dichtelemente eine kegelförmig ausgestaltete Dichtfläche auf, die kraft der Feder-Elemente und/oder der Mitnehmer mit dem jeweils zugeordneten Ventilsitz in dichtenden Kontakt bringbar ist. Die Ausgestaltung der Dichtelemente mit kegelförmiger Dichtfläche bietet wesentliche Vorteile gegenüber konventionellen Ventilen mit radial in Nuten angeordneten O-Ringen. Die Verwendung solcher O-Ringe erfordert bei konventionellen Ventilen das Einführen eines im Wesentlichen zylindrischen Abschnittes des Ventilkörpers in eine Bohrung. Der O-Ring wird durch das Eindringen in die Bohrung verformt und dichtet den Spalt zwischen Ventilkörper und Bohrung ab. Bei jedem Öffnen und Schließen eines solchen Ventils wird der O-Ring einer Scherbeanspruchung ausgesetzt, welche zum beschleunigten Verschleiß des Dichtelements führt. Dies resultiert in verkürzten Wartungs-. und Reparaturintervallen. Die erfindungsgemäßen Dichtelemente dringen in keine Bohrung ein, sondern werden kraft der Federelemente gegen eine Kontaktfläche des Ventilsitzes gepresst. Es tritt eine Verformung der Dichtelemente, aber keine Scherbeanspruchung auf. Die Standzeit solcher Dichtelemente ist um ein vielfaches höher als die der O-Ringe in den oben beschriebenen konventionellen Ventilen.

Gemäß einer weiteren Ausführungsform der vorliegenden Erfindung sind die Dichtelemente mittels einer Schraubhülse an dem ihnen zugeordneten Ventilkörper befestigbar. Die Montierbarkeit der Dichtelemente auf einem im Wesentlichen zylindrischen Abschnitt der Ventilkörper und die Befestigbarkeit mittels einer Schraubverbindung wird in dieser Ausführungsform erleichtert. Weiterhin wird ein fester Sitz der Dichtelemente erreicht und ein Verschieben der Dichtelemente ausgeschlossen. Die Montage und Demontage der Dichtelemente erfordert bei geeigneter Konstruktion der Schraubhülsen auf vorteilhafte Weise keinen Einsatz von Werkzeugen.

In einer weiteren vorteilhaften Ausführungsform der Erfindung ist das Antriebselement als eine Stange ausgeführt. Die Ausgestaltung als Stange ist mit fertigungstechnisch geringem Aufwand umzusetzen.

Gemäß einer weiteren Ausführungsform des Ventils der vorliegenden Erfindung weist der Verdränger eine schräge Kontaktfläche auf, welche mittels der Bewegung des Antriebselements an einem Kontaktabschnitt des zugeordneten Ventilkörpers entlang bewegbar ist. Die Kontaktfläche des Verdrängers verläuft hierbei schräg in Bezug auf eine Anlagefläche des Verdrängers an dem Antriebselement. Diese Anlagefläche ist regelmäßig parallel zu den Bewegungsrichtungsantriebselementes ausgestaltet. Infolge der schrägen Ausgestaltung der Kontaktfläche des Verdrängers weist der Verdränger beispielsweise ein dreieckförmiges oder trapezoides Querschnittsprofil auf. Wird der Verdränger nun entlang des Kontaktabschnitts des Ventilkörpers bewegt, so gleitet der Kontaktabschnitt des Ventilkörpers über die Schräge Kontaktfläche. Infolge der sich hierbei ändernden Querschnittsdicke des Verdrängers in eine seitliche Richtung wird der Ventilkörper infolge des Kontakts des Kontaktabschnitts mit der Kontaktfläche in die selbe seitliche Richtung um den Betrag der Querschnittsänderung des Verdrängers ausgelenkt.
Gemäß einer Weiterbildung der vorliegenden Erfindung weist die schräge Fläche einen konstanten Steigungswinkel auf. Ein konstanter Steigungswinkel der Kontaktfläche bedingt bei gleichförmiger Bewegung des Antriebselementes eine ebenfalls gleichförmige Auslenkung des Ventilkörpers. Eine gleichmäßig beschleunigte Bewegung des Antriebselements würde demzufolge auch mit einer gleichmäßig beschleunigten Auslenkung des Ventilkörpers einhergehen. Je größer der Steigungswinkel des Verdrängers gewählt wird, desto höher ist auch die Auslenkungsgeschwindigkeit des Ventilkörpers, wobei der Steigungswinkel der Winkel zwischen der Kontaktfläche des Verdrängers und der zur Bewegungsrichtung des Antriebselements parallelen Anlagefläche des Verdrängers ist.

In einer weiteren vorteilhaften Ausführungsform des erfindungsgemäßen Ventils ist die schräge Fläche gekrümmt. Durch das Vorsehen einer Krümmung der Kontaktfläche des Verdrängers kann auf vorteilhafte Weise ein progressiver oder degressiver Verlauf der Dicke des Querschnittsprofils erreicht werden. Dies ist insbesondere dann von Vorteil, wenn bei konstanter Bewegungsgeschwindigkeit des Antriebselements die Öffnungs- bzw. Auslenkungsgeschwindigkeit des Ventilkörpers nicht konstant sein soll. Ein denkbarer Anwendungsfall hierfür ist beispielsweise die Zielsetzung, zu Beginn des Öffnungs- oder Schließvorgangs des Ventils eine möglichst langsame oder schnelle Öffnungs- bzw. Schließgeschwindigkeit zu erreichen.
Ausführungsbeispiel 1,
   gekennzeichnet durch einen dritten Ventilkörper (135), der einem dritten Ventilsitz (135') zuordenbar ist, durch Kopplungsmittel mit dem Antriebselement (111) verbunden ist, und zu diesem relativ bewegbar ist.
Ausführungsbeispiel 2,
   **dadurch gekennzeichnet, dass** der erste Mitnehmer (133) an dem Antriebselement (111) ausgebildet ist, um in mindestens einer Stellung des Ventils (101) mit dem dritten Ventilkörper (135) in Kontakt bringbar zu sein.
Ausführungsbeispiel 3,
   **dadurch gekennzeichnet, dass** die Kopplungsmittel weiterhin in Form eines zweiten Mitnehmers (149) an dem Antriebselement (111) ausgebildet sind, welcher in mindestens einer Stellung des Ventils (101) mit dem zweiten Ventilkörper (151) in Kontakt bringbar ist.
Ausführungsbeispiel 4,
   gekennzeichnet durch mindestens ein drittes Feder-Element (147), das mittels Kraftwirkung zur Herstellung des Kontakts zwischen dem dritten Ventilkörper (135) und dem dritten Ventilsitz (135') und/oder dem ersten Mitnehmer (133) ausgebildet ist, und zwischen dem zweiten Mitnehmer (149) und dem dritten Ventilkörper (135) angeordnet ist.
Ausführungsbeispiel 5,
   **dadurch gekennzeichnet, dass** das dritte Federelement (147) zwischen dem Gehäuse und dem dritten Ventilkörper (135) angeordnet ist.
Ausführungsbeispiel 6,
   gekennzeichnet durch einen vierten Ventilkörper (141), der einem vierten Ventilsitz (141') zuordenbar ist, durch Kopplungsmittel mit dem Antriebselement (111) verbunden und zu diesem relativ bewegbar ist.
Ausführungsbeispiel 7,
   **dadurch gekennzeichnet, dass** der zweite Mitnehmer (149) an dem Antriebselement (111) ausgebildet ist, um in mindestens einer Stellung des Ventils (101) mit dem vierten Ventilkörper (141) in Kontakt bringbar zu sein.
Ausführungsbeispiel 8,
   weiterhin gekennzeichnet durch mindestens ein drittes Feder-Element (147), das mittels Kraftwirkung zur Herstellung des Kontakts zwischen:
   dem dritten Ventilkörper (135) einerseits und dem dritten Ventilsitz (135') und/oder dem ersten Mitnehmer (133) andererseits,
   dem vierten Ventilkörper (141) einerseits und dem vierten Ventilsitz (141') und/oder dem zweiten Mitnehmer (149) andererseits ausgebildet ist, und
   zwischen dem dritten Ventilkörper (135) und dem vierten Ventilkörper (141) angeordnet ist.
Ausführungsbeispiel 9,
   **dadurch gekennzeichnet, dass** die Feder-Elemente (117,129,147) als Schraubenfedern ausgebildet sind.
Ausführungsbeispiel 10,
   **dadurch gekennzeichnet, dass** die Federelemente (117,129,147) als Magneten ausgebildet sind, und die Ventilkörper (118,135,141,151) auf einer dem Magneten zugewandten Seite eine magnetische Fläche mit einer dem Magneten gleichen Polung aufweisen.
Ausführungsbeispiel 11,
   **dadurch gekennzeichnet, dass** die Ventilkörper (118,135,141,151) im Wesentlichen rotationssymmetrisch ausgebildet sind und an ihrer äußeren Mantelfläche Abschnitte (116) mit verringertem Durchmesser aufweisen, die von Flächen begrenzt sind, die zusammen mit einer Wand des Hohlraums (104) einen Durchtrittskanal für das zu leitende Fluid bilden.
Ausführungsbeispiel 12,
   **dadurch gekennzeichnet, dass** Dichtelemente (120) lösbar an den Ventilkörpern (118,135,141,151) befestigt sind.
Ausführungsbeispiel 13,
   **dadurch gekennzeichnet, dass** die Dichtelemente (120) eine kegelförmig ausgestaltete Dichtfläche aufweisen, die kraft der Feder-Elemente (117,129,147) und/oder der Mitnehmer (133,149) mit einem der jeweils zugeordneten Ventilsitze (118',135',141',151') in dichtenden Kontakt bringbar ist.
Ausführungsbeispiel 14,
   **dadurch gekennzeichnet, dass** die Dichtelemente (120) mittels einer Schraubhülse (122) an dem ihnen zugeordneten Ventilkörper (118,135,141,151) befestigbar sind.
Ausführungsbeispiel 15,
   **dadurch gekennzeichnet, dass** das Antriebselement (111) als eine Stange ausgeführt ist.
Ausführungsbeispiel 16,
   **dadurch gekennzeichnet, dass** die schräge Kontaktfläche (237) einen konstanten Schrägungswinkel aufweist.
Ausführungsbeispiel 17,
   **dadurch gekennzeichnet, dass** die schräge Fläche gekrümmt ist.

## Patentansprüche

1. Ventil (101), insbesondere Mehrwegeventil, mit
einem Gehäuse, welches einen Hohlraum (104), mindestens einen Einlass und mindestens einen Auslass für ein Fluid aufweist,
einem beweglich in dem Hohlraum (104) angeordneten Antriebselement (111) zur Bewegung eines Ventilkörpers (118), und
einem Ventilsitz (118'), welcher in dem Gehäuse ausgebildet und dem Ventilkörper (118) zuordenbar ist,
**dadurch gekennzeichnet, dass** der Ventilkörper (118) durch Kopplungsmittel mit dem Antriebselement (111) verbunden und zu diesem relativ bewegbar ist.

2. Ventil nach Anspruch 1,
**dadurch gekennzeichnet, dass** die Kopplungsmittel in Form eines ersten Mitnehmers (133) an dem Antriebselement (111) ausgebildet sind, welcher in mindestens einer Stellung des Ventils (101) mit dem ersten Ventilkörper (118) in Kontakt bringbar ist.

3. Ventil nach Anspruch 1 oder 2,
**gekennzeichnet durch** mindestens ein erstes Feder-Element (117), das mittels Kraftwirkung zur Herstellung des Kontakts zwischen dem ersten Ventilkörper (118) und dem ersten Ventilsitz (118') und/oder dem ersten Mitnehmer (133) ausgebildet ist, und zwischen dem Gehäuse und dem ersten Ventilkörper (118) angeordnet ist.

4. Ventil nach einem der Ansprüche 1 bis 3,
**gekennzeichnet durch** einen zweiten Ventilkörper (151), der einem zweiten Ventilsitz (151') zuordenbar ist, **durch** Kopplungsmittel mit dem Antriebselement verbunden (111) ist, und zu diesem relativ bewegbar ist.

5. Ventil nach Anspruch 4,
**dadurch gekennzeichnet, dass** der erste Mitnehmer (133) an dem Antriebselement (111) ausgebildet ist, um in mindestens einer Stellung des Ventils mit dem zweiten Ventilkörper (151) in Kontakt bringbar zu sein.

6. Ventil nach Anspruch 4 oder 5,
**gekennzeichnet durch** mindestens ein zweites Feder-Element (129), das mittels Kraftwirkung zur Herstellung des Kontakts zwischen dem zweiten Ventilkörper (151) und dem zweiten Ventilsitz (151') und/oder dem ersten Mitnehmer (133) ausgebildet ist, und zwischen dem Gehäuse und dem zweiten Ventilkörper (151) angeordnet ist.

7. Ventil nach einem der vorangegangen Ansprüche,
**dadurch gekennzeichnet, dass** einer oder mehrere weitere Ventilkörper vorgesehen sind, die:
einem jeweiligen weiteren Ventilsitz zuordenbar sind,
durch Kopplungsmittel mit dem Antriebselement (111) verbunden und zu diesem relativ bewegbar sind, und
durch weitere jeweils zugeordnete Federelemente mit dem jeweils zugeordneten Ventilsitz und/oder einem weiteren Kopplungsmittel in Kontakt bringbar sind, wobei
die weiteren Federelemente zwischen den weiteren Ventilkörpern einerseits und
den weiteren Ventilkörpern, dem Gehäuse oder dem Antriebselement (111) andererseits angeordnet sind.

8. Ventil nach einem der vorangegangenen Ansprüche,
**dadurch gekennzeichnet, dass** die ersten, zweiten, dritten, vierten und/oder weiteren Ventilkörper (118,135,141,151) ausgebildet sind, um axial an der Stange entlang gleiten zu können.

9. Ventil nach einem der vorangegangenen Ansprüche,
**dadurch gekennzeichnet, dass** der erste und/oder zweite Mitnehmer (133,149) als Ring oder Absatz auf dem Antriebselement (111) ausgebildet ist.

10. Ventil nach Anspruch 1,
**dadurch gekennzeichnet, dass** die Kopplungsmittel in Form zumindest eines Verdrängers (233) an dem Antriebselement (211) ausgebildet sind, welcher in mindestens einer Stellung des Ventils (201) mit einem zugeordneten Ventilkörper (218) in Kontakt bringbar ist.

11. Ventil nach Anspruch 25,
**dadurch gekennzeichnet, dass** der Verdränger (233) eine schräge Kontaktfläche (237) aufweist, welche mittels der Bewegung des Antriebselements (211) an einem Kontaktabschnitt (239) des zugeordneten Ventilkörpers (218) entlang bewegbar ist.

12. Ventil nach Anspruch 10 oder 11,
**dadurch gekennzeichnet, dass** jeweils ein weiterer Verdränger (233) weiteren, relativ zu dem Antriebselement (211) bewegbaren Ventilkörpern (218) zugeordnet ist.

13. Ventil nach einem der Ansprüche 10 bis 12,
**dadurch gekennzeichnet, dass** einer oder mehrere Ventilkörper (218) so im Gehäuse angeordnet sind, dass sie mittels der Bewegung relativ zu dem zugeordneten Verdränger (233) in eine von der Bewegungsrichtung des Antriebselements (211) abweichende Richtung bewegbar sind.

14. Ventil nach einem der vorangegangenen Ansprüche,
**dadurch gekennzeichnet, dass** die Kopplungsmittel einen Kolben (311) aufweisen, der mittels Druckbeaufschlagung bewegbar ist.

15. Ventil nach Anspruch 14,
**dadurch gekennzeichnet, dass** der Kolben (311) in einem Hubraum bewegbar angeordnet ist, welcher mittels einer Druckleitung (313) fluidleitend mit einem Einlass (305) verbunden ist.
